# EUROPEAN PATENT APPLICATION

(11) **EP 2 001 194 A2**
(43) Date of publication of application: **10.12.2008**
(21) Application number: 08155537.7
(22) Date of filing: 01.05.2008
(51) Int. Cl.: H04L 29/06, H04L 29/12, H04L 12/28, H04L 12/56

(54) **Inter-working of networks**

(30) Priority: 09.06.2007 GB 0711061
(71) Applicant: King's College London, London WC2R 2LS (GB)
(72) Inventor: Aghvami, Abdol, Hamid, London, W5 2NQ (GB); Pangalos, Paul, Anthony, London, N9 7QN (GB); Oikonomopoulos, Konstantinos, 106 77, Athens (GR)
(74) Representative: Casbon, Paul Richard

(57) **Abstract**

In a heterogeneous network environment comprising a plurality of first wireless networks (13) and a second wireless network (11, 12), said plurality of first wireless network utilising a first wireless communication protocol and said second wireless network utilising a second wireless communication protocol different to said first, a method of gathering data from said plurality of first wireless networks, which method comprises the steps of:
(a) electronically extracting a network identifier from at least one of said first wireless networks (13);
(b) transmitting said network identifier to a remote server (18); and
(c) said remote server (18) compiling a database of network identifiers received from said plurality of first wireless networks, storing of said database facilitating inter-working between one or more of said plurality of first wireless networks (13) and said second wireless network (11, 12).

## Description

### FIELD OF THE INVENTION

The present invention relates to a method of gathering data from a plurality of wireless networks, to a network node for use in the method, to an apparatus for use in the method, to a wireless router comprising the apparatus, to a multi-mode mobile terminal for use in the method, to a data communication network adapted to perform the method, to a method of receiving content at a multi-mode terminal, to a method of facilitating inter-working between networks, and to a method of re-configuring a remote wireless network.

### BACKGROUND TO THE INVENTION

Current (and particularly future) radio communication environments comprise a number of different access technologies and different administrative domains in which the cellular coverage of one network overlays the cellular coverage of another; such an environment is herein referred to as a heterogeneous network environment. Mobile terminals, such as mobile phones, PDAs, and notebook computers, are being provided with the ability to connect to a number of different radio access networks to take advantage of the heterogeneous network environment. For example, a PDA may be provided with a WLAN interface for accessing computer networks, and a UMTS interface for making telephone calls and accessing the Internet. This functionality may be provided by a single re-configurable interface (e.g. with Software Defined Radio) or by physically separate interfaces. Such mobile terminals are referred to herein as multi-mode mobile terminals (MMTs).

At present wireless access to data and other computer resources (e.g. the Internet) is available through two main channels: commercial network operators reliant on licensed parts of the electromagnetic spectrum on the one hand, and generally private individuals or small businesses reliant on unlicensed parts of the spectrum on the other hand. For example commercial network operators (e.g. VODAFONE®, O2®, etc.) enable a user to access resources online with a MMT via a UMTS network. That user might be able to access the same online resources via a wireless LAN (WLAN) using their MMT whilst located within range of a WLAN router.

Also a MMT may have an interface for receiving data from a digital broadcast network. Digital broadcast networks (such as American Television Standards Committee (ATSC), European Telecommunications Standards Institute Digital Video Broadcasting (DVB) and Japanese Integrated Service Digital Broadcasting (ISDB)) are generally intended to offer point-to-multipoint unidirectional data transfer, although some schemes have been proposed for limited capacity data transfer from mobile terminals back to the broadcast network (for example DVB-Return Channel Terrestrial). Currently data is transmitted from a number of transmitters to provide coverage for a certain large geographical area (-80km radius). Digital broadcast networks are characterised by high data transfer rates on the downlink. For example a DVB network may broadcast multiplexed data transmission streams at a rate of the order of tens of Mbps. In contrast, mobile cellular networks offer a point-to-point bidirectional voice and limited data service between terminals (either mobile of fixed). Data transfer rates in mobile cellular networks are generally lower than digital broadcast networks. For example IMT-2000 (e.g. UMTS) networks will offer a bandwidth of approximately 2Mbps over a cell radius of several hundred metres.

Attention has recently been turned to use of digital audio and video broadcast networks for transmission of datagrams. For example the DVB-Handheld (DVB-H) standard has been proposed to permit mobile terminals to receive data (e.g. Web pages, movies and e-mails) from broadcast networks. The present DVB Bluebooks relating to DVB-H and the transport of IP datagrams using DVB are available at www.dvb.org. In the future it is expected that the number of broadcast transmitters will increase, with each having a smaller area of coverage. Thus the digital broadcast network is and will be cellular insofar as the total geographical area covered by the network is divided into a number of cells, each delimited by the area of coverage of one (or a few) transmitter(s). However, it is anticipated that providing an increased number of broadcast transmitters will be expensive and slow to implement widely.

As mentioned above many individuals and businesses have installed wireless local area networks (WLANs) (e.g. Wi-Fi) in their homes or other premises. WLANs use an unlicensed part of the spectrum for wireless transmission of data, as opposed to broadcast and cellular services that use licensed portions. Typically a WLAN is used to provide network layer connectivity for mobile devices. A frequent setup in a user's home is a DSL modem (providing a wired broadband connection to an ISP) connected to a WLAN router. By means of the WLAN the mobile devices in or around user's home can obtain data from topologically remote networks; the most common example of a WLAN is to provide wireless connectivity to the Internet for a device (e.g. notebook computer, gaming device, etc.).

In contrast to broadcast and cellular networks the coverage offered today by a conventional WLAN router is of the order of a few tens of metres. However, at present WLANs do offer considerably better data transfer rates than cellular networks (e.g. UMTS); for example a WLAN connection employing the 802.11g protocol might be able to achieve a maximum download data transfer rate of 54Mbit/s, whereas a UMTS network supports only up to 14Mbit/s download in theory, and in practice rates are about 3.6Mbit/s for HSDPA mobile nodes.

Due to their widespread use WLANs offer the possibility for commercial operators relying on the licensed parts of the spectrum to shift load to a WLAN if appropriate. For example, content (e.g. multicast mobile TV) could be delivered by DVB-H (or other digital broadcast protocol) in certain areas and by WLAN (or other local wireless network) when the user is within range of a WLAN router. It is expected that this would dramatically reduce the density and cost of DVB-H infrastructure required to roll out services across large areas (e.g. cities, regions and countries). However the ability to exploit WLANs for such purposes is restricted at present since commercial networks know virtually nothing about the geographical distribution and configuration of the vast majority of WLAN networks.

We have recognised that there are various problems to be addressed in overcoming this difficulty, namely how to gather information about the WLANs, how to configure users' MMTs to be useable with certain of those WLAN networks, and how to retain AAA over the WLAN hardware and users' activities. In particular, whereas commercial operators have configuration control over the cellular interface of a MMT attached to their network, they do not have any control of the WLAN interface of the same device, nor any control over the configuration of the WLAN routers that the MMT may encounter. Accordingly the commercial operator cannot assist the user in setting up the MMT and/or the WLAN router to utilise the WLAN. Furthermore the network operators do not have any indication of when a MMT is within range of a WLAN network whereby a handover might take place.

Although it is possible for MMTs to connect to any WLAN that is discovered this is not practical in reality. Since a connection to the Internet has to be paid for (and often the amount of data downloaded), in many countries it is now illegal to use another person's WLAN without permission to connect to the Internet and download content. Accordingly it is not possible for MMTs to simply be configured to automatically connect to any WLAN. Additionally, there are many overlapping WLANs in towns and cities such that a MMT can potentially have access to one, two, three or more WLANs simultaneously. In that case the MMT relies on the user to select the correct one.

Having selected a WLAN, the interface of the MMT must be correctly configured for successful data transfer. Many users find the configuration of WLAN interfaces technically challenging (e.g. inputting the network key and other settings) and the amount of manual configuration required can vary from device to device.

Therefore, switching delivery of content to a WLAN is likely to remain unattractive for the commercial operators.

### SUMMARY OF THE INVENTION

Preferred embodiments of the present invention make possible the gathering and storage at a server of data, and in one aspect configuration data, from remote wireless networks. The data is then useable by the server for a variety of purposes for example facilitating inter-working between networks, pre-configuring MMT interfaces, and other applications.

According to the present invention there is provided in a heterogeneous network environment comprising a plurality of first wireless networks and a second wireless network, said plurality of first wireless networks utilising a first wireless communication protocol or type and said second wireless network utilising a second wireless communication protocol or type different to said first, a method of gathering data from said plurality of first wireless networks, which method comprises the steps of:
(a) electronically extracting a network identifier from at least one of said first wireless networks;
(b) transmitting said network identifier to a remote server; and
(c) said remote server compiling a database of network identifiers received from said plurality of wireless networks, storing of said database facilitating inter-working between one or more of said plurality of first wireless networks and said second wireless network. The remote server may be part of or accessible by the second wireless network, or may be operated by a third party as a service for commercial mobile/broadcast network operators for example. The first wireless communication protocol may be defined according to type of network e.g. WLAN, whereby each first wireless network might use a different implementation of one or more general standards e.g. IEEE 802.11 and/or IEEE 802.16 for example.

Preferably, step (b) comprises transmitting said network identifier from said at least one first wireless network using a different wireless communication protocol to said first wireless communication protocol. One advantage of this is that a secure communication channel can be used.

Advantageously, said different wireless communication protocol comprises said second wireless communication protocol. For example the first wireless communication protocol might be of the WLAN type, and the second wireless communication protocol might be of the mobile telecommunications type e.g. 3G, UMTS, etc.

Preferably, the method further comprises the step of using said different wireless communication protocol to authenticate said at least one first wireless network with said remote server before step (b).

Advantageously, said authentication step further comprises the steps of obtaining at least one MAC address from a device that operates said at least one first wireless network, and transmitting said at least one MAC address to said remote server. By sending a MAC address to the remote server security is enhanced since the remote server can require communications from remote wireless nodes to include the MAC address they have detected in a broadcast beacon for example. In one embodiment all the MAC addresses from the device are sent to said remote server.

Preferably, said at least one first wireless network comprises a device providing an access point to said first wireless network, which device comprises a first interface using said first wireless communication protocol and a second interface using said different wireless communication protocol, the method further comprising the steps of obtaining an authentication code from said second interface, which authentication code is useable to authenticate said at least one first wireless network with said remote server. For example the authentication code may be obtained from a UICC that is inserted by the user into the device before use. Alternatively the authentication code may be stored in the device during manufacture.

In one embodiment said authentication code comprises an IMSI number. This enables the remote server to use standard authentication procedures for the first wireless network. Such standard authentication procedures can be those used by cellular/mobile networks for example.

Advantageously, said network identifier is extracted from said at least one first wireless network as part of a set of configuration data, which configuration data facilitates connection of multi-mode terminals to said at least one first wireless network, and wherein said configuration data is stored by said remote server in said database. The configuration data may comprise an identity of an authorisation and/or security protocol in use by said first wireless network, and any associated key(s), so that remote wireless devices may be configured to pass said authentication and/or security protocol of the first wireless network without the need for manual configuration by the user.

Preferably, said configuration data comprises network settings of said at least one first wireless network. Such network settings may include IP address settings and/or security settings for example.

Advantageously, the method further comprises the step of said at least one first wireless network transmitting any change in said network identifier and/or said configuration data to said remote server. If the first wireless network is a WLAN type network for example, any change to the network identifier (i.e. SSID, ESSID, BSSID) or any other WLAN settings may be transmitted to the remote server, whereby remote devices registered to that WLAN may be automatically updated with the new settings by the remote server.

In one embodiment said network identifier comprises an SSID, BSSID or ESSID of each of said plurality of wireless networks. If the first wireless network is an open WLAN network (i.e. no security), all that is needed is the SSID to configure remote MMTs to automatically connect to the WLAN when detected.

In another embodiment said network identifier comprises a MAC address of each of said plurality of wireless networks. In this case both the SSID and MAC address are sent to the remote server. This is preferred as it provides a layer of security against malicious users spoofing SSIDs for example.

Preferably, there is one or more multi-mode terminal having one or more interface for accessing wireless networks in said heterogeneous network environment, the method further comprising the steps of:
(i) said multi-mode terminal detecting one or more of said plurality of first wireless networks and storing the network identifier broadcast by each;
(ii) transmitting to said remote server a list comprising the or each network identifier;
(iii) said remote server receiving said list and using the or each network identifier to search said database for entries corresponding thereto; and
(iv) said remote server instructing configuration of said multi-mode terminal and/or storage of a configuration profile for at least one of said one or more first wireless network using configuration settings extracted from said database. In this way the multi-mode terminal may be automatically configured to operate with any of the detected wireless networks. The remote server may also respond with the list of detected networks in order of connection priority.

Advantageously, step (iv) comprises transmitting a configuration message to said multi-mode terminal using a wireless communication protocol different to said first wireless communication protocol.

In one embodiment said configuration message comprises an Over The Air (OTA) Settings type message.

Preferably, steps (i)-(iv) are performed whilst said multi-mode terminal receives content from a wireless network other than said detected one or more first wireless networks. This enables the multi-mode terminal to be configured so that delivery of the content can be handed over from one network to the other. For example, the MMT may be tuned to a program (e.g. television, movie) in an MPEG transport stream from a broadcast network. On detecting the first wireless network the MMT is already or may be configured to connect to it without the need for user authorisation/configuration. The MMT can then receive the remainder of the program from the first wireless network.

Advantageously, following configuration of said one or more interface by said remote server, the method further comprises the steps of said multi-mode terminal transmitting a request for said content to be delivered via a selected one of said one or more detected first wireless networks.

Preferably, the method further comprises the step of said multi-mode terminal automatically connecting to said first wireless network upon detection thereof. 'Connecting' may mean establishing connectivity between the multi-mode terminal and the first wireless network at the MAC and/or network layers for example.

Advantageously, there is a plurality of first wireless networks utilising substantially the same wireless communication protocol in a particular vicinity, the method enabling said multi-mode terminal when in said vicinity to select and connect to the correct first wireless network from amongst said plurality. In this way the user is not required to manually select the correct network. The 'correct' network may be a WLAN at the user's home or work for example.

Preferably, the method further comprises the step of performing an authorisation check to ensure that said multi-mode terminal has permission to access said first wireless network.

Advantageously, said authorisation step comprises said remote server awaiting receipt of a code from said multi-mode terminal which code enables said remote server to determine that a user of said multi-mode terminal has said necessary permission. There are envisaged two ways of using the code to check the user is authorised. Firstly, if the hardware of the first wireless network comprises or has access to some form of screen (e.g. an LCD screen), the remote server may send a code to the first wireless network for display on the screen; the user reads the code and sends it back to the remote server via an SMS or other electronic message for example. The advantage of using SMS or other message in which the telephone number of the multi-mode terminal is transmitted as part of the message is that the remote server is able to make an association between the first wireless network and an identity of the multi-mode terminal. In this first case the code may be an alphanumeric string for example. One advantage of sending a code is that the user is not required to obtain and send to the remote server any complicated technical data, for example a MAC address to perform the authorisation step. Accordingly in this first case the authorisation step may comprise said remote server sending a code to said first wireless network and awaiting receipt of said code over a separate channel. On receipt of the code the remote server may use the code to search the database for a match. Since MAC addresses are globally unique, there should not be any double-entries of the same MAC address in the database. On finding a match the remote server can confirm that the first wireless network intends to take part in the method and that the user is authorised to use that first wireless network.

However, in the second way of using a code, the code is a MAC address (or other hardware identifier) of the first wireless network (e.g. of the wired or wireless interface) and the user is requested to obtain and send it to the remote server. Usually such a MAC address is printed on the box of a WLAN router for example; additionally or alternatively registration instructions for the service may show the user how to obtain this MAC address using a PC for example. The user is instructed to send the MAC address in an electronic message (e.g. an SMS message) using the multi-mode terminal that they wish to register for the service. In this way the remote server is able to check that the user is authorised to access the first wireless network. In either case the user it is not essential that the user has access to a PC or other computer in order to take part in any inter-working service offered as a result of performing the method.

Preferably, the method further comprises the step of said remote server storing a mapping between said network identifier and said code.

Advantageously, an electronic message containing said code received over said second communication channel comprises one or more contact address, the method further comprising the steps of said remote server using said code to look up said network identifier associated therewith and storing a mapping between said network identifier and said one or more contact address. The contact address may be a telephone number of one or more multi-mode terminal. In this way the second wireless network may associate one or more MMT with the first wireless network so that the or each MMT may be configured for the first wireless network at substantially the same time.

Preferably, the method further comprises the step of transmitting a Handover Information Table to be received by multi-mode terminals, which Handover Information Table comprises data facilitating request by a multi-mode terminal of a service from a network node residing in a remote IP-based network, which service is to be delivered via said at least one of said first wireless networks. The data may be an IP address and/or port number so that the MMT can request the same service from a remote media server for example.

Advantageously, said Handover Information Table is transmitted by said second wireless network and/or a broadcast network to which said multi-mode terminal has access.

In one embodiment said network identifier is an SSID, ESSID or BSSID.

Preferably, said first wireless network comprises a transmitter having a useable signal range up to approximately 50m therefrom, and said second wireless network has a plurality of geographically distributed transmitters at least some of which have a useable signal range each of up to several kilometres.

Advantageously, said first network is setup and maintained by a private individual, and said second wireless network is operated and maintained commercially and to which said private individual has access via said multi-mode terminal. In one aspect the first wireless network is set up by the user in his home or is otherwise accessible on a business premises such as a café, bookshop, airport, etc. or in public places.

Preferably, said network identifier of the first wireless network is controllable by a user thereof and is ordinarily not controllable by an operator of said second wireless network.

Advantageously, said first wireless network comprises a WLAN or WMAN network. 'WLAN' is a term used to indicated any Wireless Local Area Network of any current or future wireless communication protocol for example according to IEEE 802.11 (e.g. one or more of 802.11a/b/g/n or any future protocol under the standard), for example Wi-fi. 'WMAN' is a term used to indicate any Wireless Metropolitan Area Network for example according to IEEE 802.16 e.g. WiMAX. In the latter case, the invention permits mobile and broadcast networks to inter-operate with ISPs that use WiMAX for example.

Preferably, said second wireless network comprises a cellular/mobile network or a broadcast network.

Advantageously, said first wireless network utilises an unlicensed part of the electromagnetic spectrum and said second wireless communication network utilises a licensed part of said spectrum.

According to another aspect of the present invention there is provided a network node comprising a memory storing computer executable instructions for performing and/or instructing the remote server steps as set out above. The network node may be an inter-working server substantially as described herein.

According to yet another aspect of the present invention there is provided an apparatus for use with a wireless network, which apparatus is configured, in use, to access a router in said wireless network and to: (i) extract from said router a network identifier assigned to said network, (ii) transmit said network identifier to a remote server. The network identifier stored in the apparatus might be preset at point of manufacture and may or may not be subsequently adjustable by the user. In some embodiments the apparatus may take the form of a USB 'stick' type device or a data card (e.g. ExpressCard) for plugging into the wireless network. For example, the apparatus may plug into a WLAN router via a US port or PCMCIA slot. Additionally or alternatively, the apparatus may take the form of a standalone device that is connected to the wireless network either wirelessly (e.g. via WLAN, Bluetooth, etc.) or with a wired connection (e.g. Ethernet cable).

Preferably, a network location of said remote server is stored in a memory of said apparatus, whereby said network identifier may be sent to said network location. The network location may be a pre-configured (e.g. by the manufacturer) URL for the remote server to which the network identifier is to be sent.

Advantageously, the apparatus further comprises a wireless interface for transceiving data via a wireless communication protocol different to the wireless communication protocol used by said wireless network.

Preferably, said interface comprises a mobile telecommunications modem.

Advantageously, the apparatus further comprises a Universal Integrated Circuit Card (UICC) or a slot therefor, whereby in use, said apparatus may be authenticated by a remote mobile telecommunications network. In this way a user may purchase a UICC (e.g. 'SIM card') and activate it following the network operator's usual procedures; following this the network operator is able to authorise and authenticate the user's WLAN type network via the SIM card.

According to another aspect of the present invention there is provided a wireless router comprising an apparatus as set out above. The wireless router may be a WLAN router or an Access Point for example. The wireless router may have the apparatus fully or partially integrated into it. In that case there may be a slot for receiving a UICC or port for receiving a device (e.g. USB stick or data card) holding a UICC. Alternatively the apparatus may be separate from the wireless router but both are supplied together in kit form. If the kit is supplied from a mobile telephone supplier the UICC may already be part of the apparatus. If not, the apparatus may have a slot or port as described above. In use, the user connects (wired or wireless) the apparatus to the wireless router.

According to another aspect of the present invention there is provided a multi-mode terminal comprising a memory storing computer executable instructions for performing the multi-mode terminal steps set out above. In one aspect the multi-mode terminal can be any handheld portable wireless device, for example a PDA, mobile telephone, digital music/video player, laptop or notebook computer.

According to another aspect of the present invention there is provided a data communication network adapted to perform the network method steps set out above.

According to yet another aspect of the present invention there is provided a method of receiving content at a multi-mode terminal in a heterogeneous network environment which method comprises:
(a) receiving content at said multi-mode terminal from a broadcast or mobile type network;
(b) monitoring for the presence of a WLAN type network; and
(c) upon detection of said WLAN type network, using a configuration profile stored in memory to automatically connect to said WLAN type network, which configuration profile has been generated by a method as set out above; and
(d) requesting said content to be delivered from a remote media server over said WLAN type network.

There is also provided a multi-mode terminal comprising a memory storing computer-executable instructions for performing the method.

According to another aspect of the present invention there is provided a method of facilitating inter-working between a mobile or broadcast network and a WLAN network for the delivery of content to multi-mode terminal, which method comprises the step of transmitting data from said mobile or broadcast network to said multi-mode terminal, which data comprises a mapping between a first content identifier identifying content in the mobile or broadcast network and a second content identifier identifying the same content in an IP-based network, whereby a multi-mode terminal may use said data to request said content from said IP-based network to facilitate handover from said mobile or broadcast network to said WLAN network. The WLAN network may be a network according to IEEE 802.11 or 802.16 for example.

Preferably, said first content identifier comprises a PID in an MPEG transport stream broadcast from said broadcast network.

Advantageously, said second content identifier comprises an IP address and port number of a remote media server from which said content may be requested.

According to another aspect of the present invention there is provided a method of re-configuring an interface of a remote wireless network, which method comprises the steps of:
(a) extracting contact data from a database comprising a mapping between a plurality of network identifiers of remote wireless networks and respective contact data for each of said remote wireless networks;
(b) using said contact data to send an electronic message to said remote wireless network, which electronic message comprises new configuration data settings for automatically re-configuring an interface of said remote wireless network. The contact data may be a telephone number of a UICC in the remote wireless network (e.g. in a wireless router) and the network identifiers may be SSIDs of WLAN type networks. As another example, the contact data may be an IP address (e.g. the public IP address of the wireless router) that can be used to cause the UICC to initiate setup of a PDP context over a mobile telephone network whereby the WLAN can pull the data from the mobile network.

Preferably, said database has been compiled by a method as set out above. Alternatively it may be compiled manually.

Advantageously, said remote wireless network comprises an apparatus as set out above.

Preferably, the method further comprises the step of re-configuring said remote wireless network so that it becomes inaccessible to members of the public, but accessible by members of the emergency services or other authorised persons. In this way certain remote wireless networks can be controlled remotely to provide connectivity for authorised persons during emergency or other situations.

### BRIEF DESCRIPTION OF THE FIGURES

For a better understanding of how the invention may be put into practice, a preferred embodiment of the invention applied in a heterogeneous network environment comprising a UMTS network, a DVB network and a WLAN will be described, by way of example only, to the accompanying drawings in which: -
Fig. 1 is a schematic block diagram of a heterogeneous network environment in which the invention may be put into practice;
Fig. 2 is a schematic block diagram of the network environment of Fig. 1 and entities according to the present invention;
Fig. 3 is a schematic block diagram of an apparatus according to the present invention;
Fig. 3A is a schematic block diagram of a prototype of the apparatus of Fig. 3;
Fig. 4 is a schematic block diagram of a multi-mode terminal according to the present invention;
Fig. 5 is a schematic block diagram of the entities stored and operated on the multi-mode terminal of Fig. 4;
Fig. 5A is a schematic block diagram of a remote server according to the present invention;
Fig. 6 is a schematic flow diagram of steps in a method performed by the apparatus of Fig 3 and 3A, and by a server according to the present invention; and

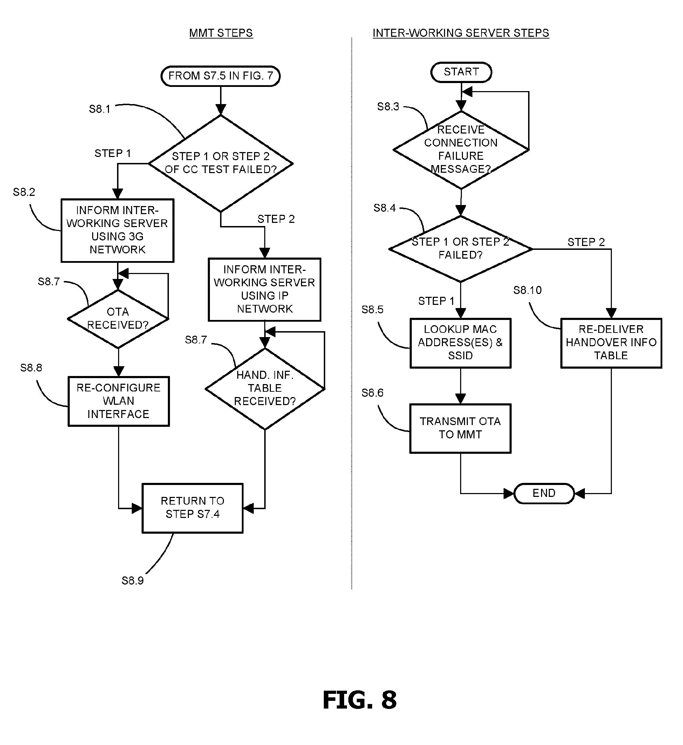

Figs. 7 and 8 are schematic block diagrams of steps in a method performed by the multi-mode terminal of Fig. 4;

### DETAILED DECRIPTION OF THE PREFERRED EMBODIMENTS

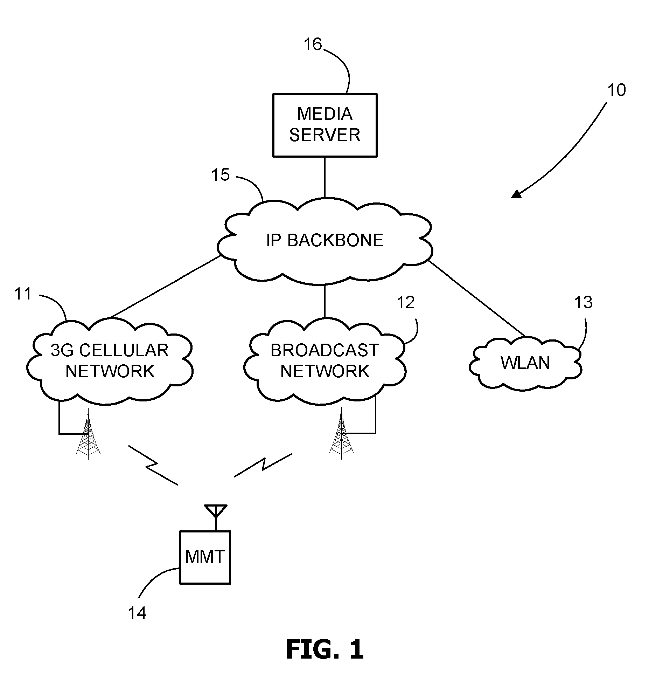

Referring to Fig. 1 a heterogeneous network generally identified by reference numeral 10 comprises a 3G cellular network 11, a broadcast network 12 and a wireless local area network (WLAN) 13. Each of the two networks 11, 12 is under a different administrative domain and they are heterogeneous i.e. the protocols for access, transmission and handling of data may differ between the networks. The WLAN 13 is also under a separate administrative domain: typically in a home environment (although WLANs are also found in offices, public areas, etc.); the WLAN utilises a communication protocol such as IEEE 802.11 g or 802.16 which is usually different from the protocols used in the cellular network 11 and broadcast network 12. It is also possible that the WLAN 13 may be operated under by one of the operators of the cellular network 11 or the broadcast network 12.

A Multi-mode Mobile Terminal (MMT) 14 has interfaces (or a single re-configurable interface) for accessing all of the networks 11, 12 and 13. The mobile network 11 may provide access for the MMT 14 to packet-switched services via a UMTS radio access network (RAN) interface for example. Depending on the service used by the user, packet data may be routed to and from the mobile network 11 via the IP backbone 15 (e.g. Internet) or to another public land mobile network (PLMN), not shown. The broadcast network 12 is asymmetric in data transfer, and offers a much greater bandwidth on the downlink than on the uplink from the MMT 14. The same data is broadcast from a transmitter 17 for reception by a large number of MMTs in range of the transmitter 17. Data may be broadcast using a digital transmission protocol such as DAB, DVB (Handheld, Satellite, Terrestrial, Cable), ISDB, etc.

The mobile network 11 comprises a PLMN that is divided into (a) the Core Network (CN) comprising a gateway GPRS support node (GGSN), a serving GPRS support node (SGSN) and a Home Location Register (HLR); and (b) the UMTS Terrestrial Radio Access Network (UTRAN) comprising the radio network controller (RNC) and Node B. The GSNs (i.e. the GGSN and SGSN) constitute the backbone of the UMTS network 11. The UMTS network 11 forms a Public Land Mobile Network (PLMN) and each network operator (e.g. ORANGE®, VODAFONE®) owns and maintains a respective PLMN.

In use, each Node B sends data to and receives data from MMTs 14 within a UMTS cell over a wireless link. The Gateway GPRS Support Node (GGSN) is used as an interface from a cellular network to external Packet Data Networks (PDNs). The PDN may be the Internet 15 or a wide area network (WAN) for example. The GGSN maintains routing information required to tunnel user data packets to the SGSN serving a particular subscriber. There is usually one GGSN per PLMN. Other functions include network and subscriber screening and address mapping.

In use, the GGSN sends packets to and receives packets from various SGSNs and the various external PDNs as described above. The network layer connectivity provided by the UMTS packet-switched domain between a MMT 14 and the GGSN is supported by the Packet Data Protocol (PDP) and the GPRS Tunnelling Protocol (GTP). GTP operates such that the transport of network layer datagrams (e.g. IP or UDP packets) between the GGSN and MMT 14 is handled at the link layer. Datagrams are only examined at the MMT 14 and GGSN. In particular the GGSN assigns an IP address to the network layer interface of each MMT 14; when the MMT 14 starts a session with a correspondent node on a remote PDN, the MMT 14 uses its assigned IP address as the source address in IP packets. The GGSN acts as a gateway router between all of the MMTs 14 of the UMTS network 11 and external PDNs such as the Internet. However, to route packets across the UMTS network 11 the GGSN does not rely on network layer routing mechanisms, but relies on PDP contexts established and maintained by the MMT 14, SGSN and GGSN. In this way the UMTS network 11 is able to provide layer 2 connectivity that can support any layer 3 protocol.

The broadcast network 12 comprises a DVB network having a central multiplexer that receives a number of separate inputs (for example audio, video, etc.) that are each encoded into a respective MPEG transport stream (MPEG-TS) with an MPEG-2 encoder. Data from an external PDN (e.g. Internet) may be multiplexed into the MPEG-TS by a DVB gateway, either as a separate channel or by exchanging stuffing packets in the MPEG-TS for packets containing data, e.g. IP packets. In particular the DVB gateway operates by taking IP datagrams received from the external PDN and inserts them into MPEG-TS packets according to the Multi Protocol Encapsulation (MPE) for example (see EN 301 192 at www.etsi.org). The multiplexed streams are transmitted over an ATM (Asynchronous Transfer Mode) or SDH (Synchronous Digital Hierarchy) network to a number of regional multiplexers. The regional multiplexers may multiplex further streams into that received from the central multiplexer. For example local news and weather content may be multiplexed into the main MPEG-TS from the central multiplexer.

The regional multiplexers forward the MPEG-TS to a DVB transmitter. Each DVB network transmits a Program Association Table (PAT) that lists Packet Identifiers (PIDs) associated with a particular program carried by the TS Multiplex. The PAT enables the MMT 14 to filter the correct TS packets from the TS Multiplex so that the desired data may be assembled for use by the MMT 14.

In use, the MMT 14 is able to access content (e.g. audio, video, movies, television, video clips, or any other digital data) from a media server 16 via either of the cellular network 11 or the broadcast network 12. The media server 16 is remote from the networks 11 and 12 and might be operated and maintained by a third party, although it is possible that it is operated and maintained by one of the operators of the cellular network 11 and the broadcast network 12. The media server 16 transmits content in packet form at the network layer. Due to differences in communication/transmission protocols this packet data is handled differently by the networks 11 and 12. For example, the cellular network 11 may enable the user of the MMT 14 to browse and select content from the media server 16 using a browser application. As such the user has access to services such as a Video on Demand in which the media server unicasts data to the MMT 14. Alternatively the media server 16 may multicast data to a number of MMTs simultaneously over the mobile network 11.

The media server 16 may also supply packet data to the broadcast network 12. As explained above the broadcast network 12 may convert the packet data into an MPEG format and/or stuff IP packets into the MPEG-TS. The MMT 14 may receive certain data (e.g. a television program) by tuning to the PID associated with that program in the PAT.

The area of coverage provided each transmitter of the mobile network 11 and broadcast network 12 tends to be quite different. For example a DVB transmitter may have a radius of acceptable S/N ratio of tens of kilometres, whereas a Node B of a UMTS network may have a radius of acceptable S/N ratio of hundreds of metres up to several kilometres. However, it is not unknown for DVB transmitters to transmit at a power level providing good S/N ratio at a maximum of a few hundred metres.

The user of the MMT 14 may move around the geographical area of coverage provided by the mobile network 11 and broadcast network 12. Very often the MMT 14 will come within range of the WLAN 13, which in this embodiment is a WLAN at the home of the user of the MMT 14. There are two scenarios with which the invention is concerned:
(1) the user is in the coverage area of the WLAN router 24 when requesting content; and
(2) the user is viewing content when he/she enters the coverage area of the WLAN router 24.

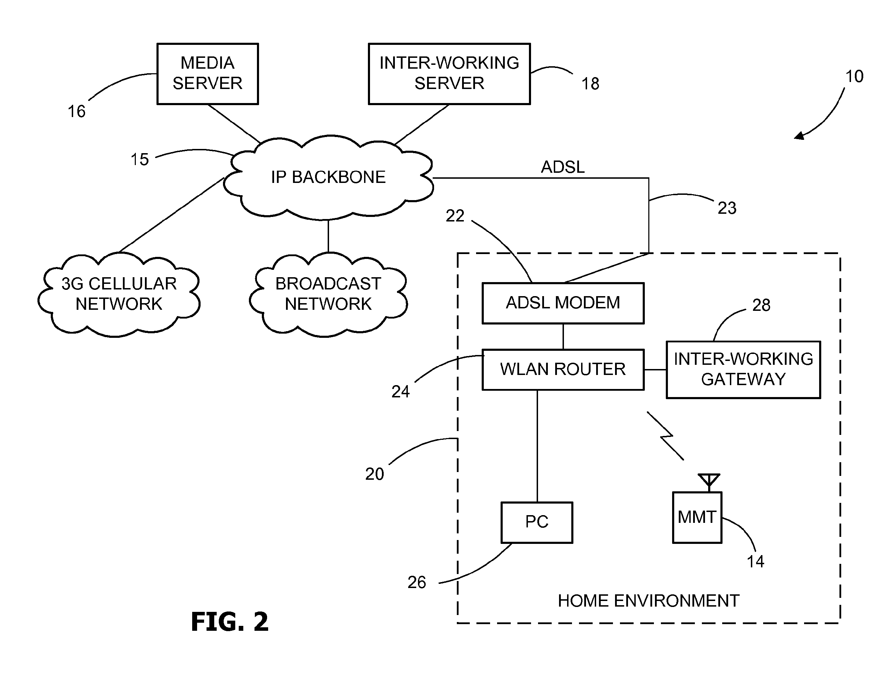

Fig. 2 shows the heterogeneous network environment 10 that is enhanced with functionality according to the present invention. An inter-working server 18 is attached to the IP backbone network; the functionality of this server will be described in greater detail below. A home environment 20 of the user comprises an ADSL modem 22 providing access to the IP backbone 15 via an ISP (not shown) and an ADSL connection 23; a WLAN router 24 provides routing and DHCP services for a PC 26, over a wired connection, and the MMT 14 over a wireless connection using a protocol such as 802.11g; and an inter-working gateway 28 enables the MMT to access content from the media server 16 as described in greater detail below.

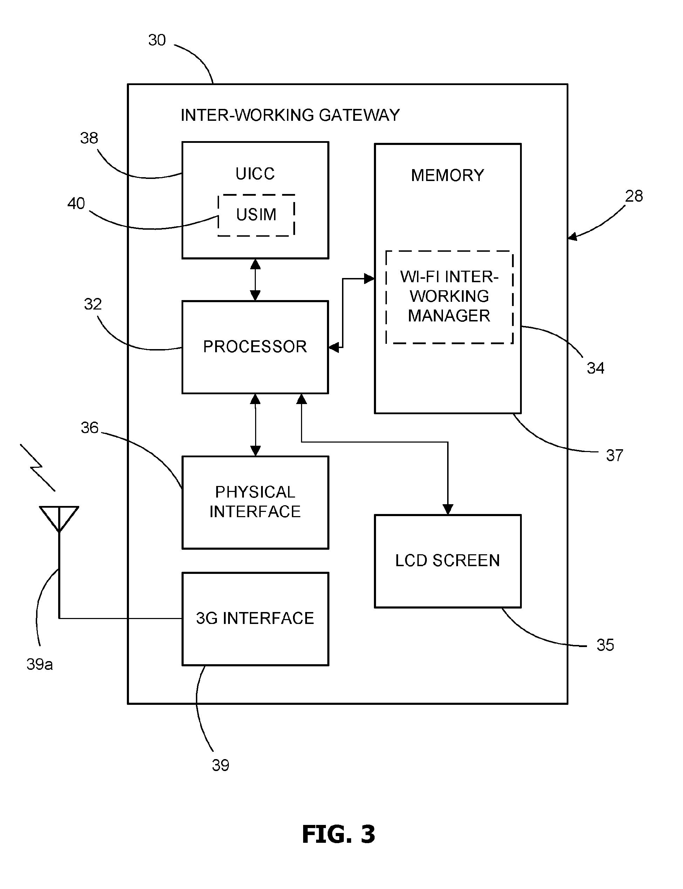

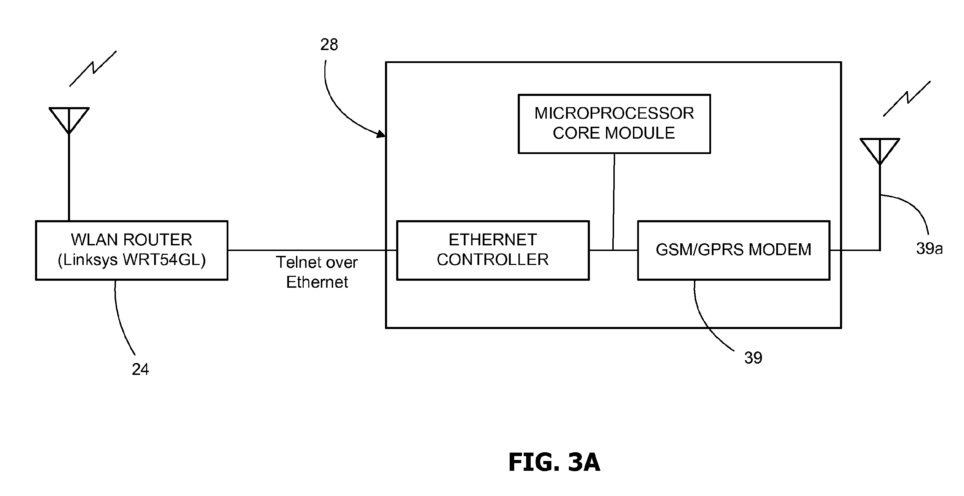

Referring to Fig. 3 the inter-working gateway 28 comprises a housing 30 that contains a processor 32 having access to a computer memory 34 (such as semiconductor memory providing RAM), an LCD screen 35, a physical interface 36 and a 3G interface 39. The inter-working gateway 28 also comprises a Universal Integrated Circuit Card (UICC) 38 to which the processor 32 has access. The UICC may be replaced by any other circuit card (e.g. a RUIM or a CSIM) so that the inter-working gateway 28 may function with any kind of mobile network. Logical entities in the inter-working gateway 28 are indicated by dashed lines: there is a USIM and/or ISIM 40 on the UICC and the memory 34 stores a logical entity herein called a Wi-fi inter-working manager 36 whose functionality will be described in greater detail below. The 3G interface 39 comprises an antenna 39a that enables the inter-working gateway 28 to communicate with the mobile network 11 using the particular communication protocols of that network.

A prototype of the inter-working gateway 28 was built using an Ethernet-enabled Machine-to-Machine (M2M) application kit from Rabbit Semiconductor. The kit comprises: a microprocessor core module (including microprocessor, Ethernet port, flash and SRAM memory, keypad/display unit); a wireless modem system (including dual band GSM/GPRS modem 39a, antenna, slot for UICC card); and a software development system (compiler, libraries (e.g. SMS/GPRS modes), sample programs (e.g. for SMS and GPRS communications and control, FTP datalogging, TCP/IP, SMTP, POP3, Telnet)). The M2M application kit enables packet-switched wireless communication (using GPRS) with GPRS-enabled device (i.e. the inter-working server 18). For example, the libraries and sample programs allow inter-working gateway 28 to send SMS (text) messages to the inter-working server 18 over GPRS.

The M2M application was assembled as shown in Fig. 3A: the microprocessor core module interfaces with an Ethernet controller and the GSM/GPRS modem. The Ethernet controller is connected via an Ethernet cable to the WLAN router 24 (in this case a Linksys WRT54GL), thereby providing a path for communication between the microprocessor core module and the WLAN router 24. The microprocessor core module was programmed to have the functionality of the inter-working gateway 28 described herein. In particular, the microprocessor core module uses Telnet over the Ethernet link to interrogate the WLAN router 24 for it's MAC addresses, IP addresses and configuration data, as described in greater detail below.

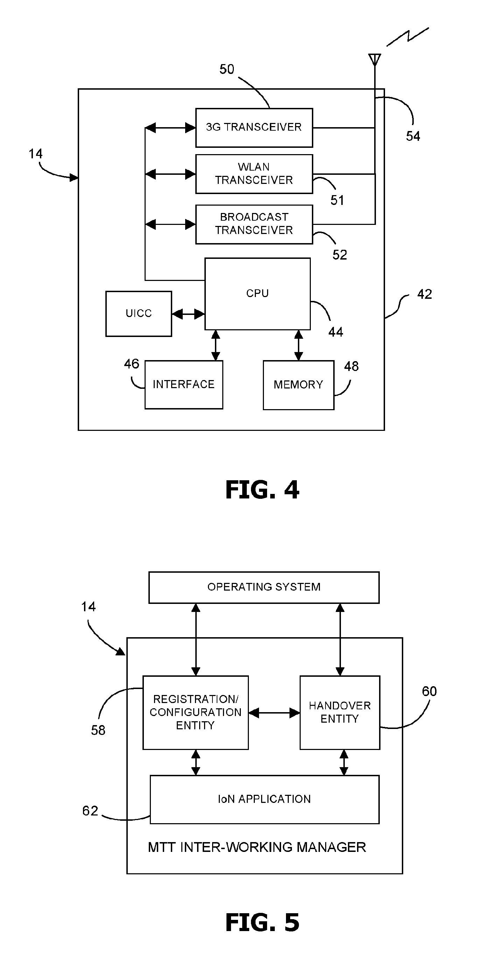

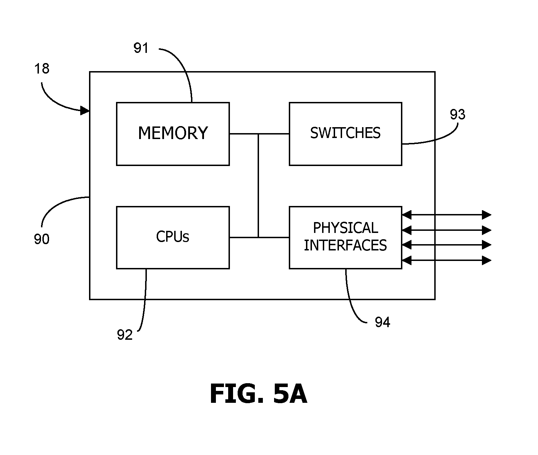

Referring to Fig. 4 the MMT 14 comprises a case 42 housing a CPU 44, an interface 46, a computer memory 48, a 3G transceiver (or interface) 50, a WLAN transceiver (or interface) 51 and a broadcast transceiver (or interface) 52. The 3G transceiver 50 and the broadcast transceiver 52 are wired to an antenna 54 for reception and transmission of data with the mobile network 11 and for reception of data from the broadcast network 12 respectively. The WLAN transceiver 51 enables reception and transmission of data with wireless access points. The CPU 82 interfaces with all of the aforementioned components to process (store, access, etc.) electronic data. The memory 48 stores computer executable instructions that when executed by the CPU 44 bring into operation the logical entities shown in Fig. 5

Referring to Fig. 5 a MTT inter-working manager generally identified by reference numeral 56 comprises logical entities (registration/configuration entity 58, handover entity 60 and IoN application 62) that are stored in the memory 48 of the MMT 14. The registration/configuration entity 58 and the handover entity 60 interface with an operating system (e.g. Symbian) of the MMT 14. The functionality of the various logical entities will be described in greater detail below.

Referring to Fig. 5A the inter-working server 18 comprises a network node having a housing 90, a memory 91, one or more CPU 92, switches 93 and physical interfaces 94. The physical interfaces 94 include an interface for receiving SMS or other type text messages from another network node in the mobile network 11, and an interface for communication over Ethernet with the IP Backbone 15. The memory 91 stores computer executable instructions that when executed bring about the functionality of the inter-working server as described herein.

### Operation

In use, the user configures their WLAN router 24 in the usual way i.e. DHCP configuration, network security key, SSID, MAC filtering etc. Alternatively the WLAN router 24 may be pre-configured by a third party that provided the equipment. The WLAN router 24 then operates as an Access Point (AP). In order that the AP is discoverable by mobile terminals the WLAN router 24 transmits a management frame subtype called a 'beacon' at regular intervals (e.g. 100ms). All MMTs passively scan all RF channels and listen for beacons coming from APs in order to discover when in range.

Various pieces of information are transmitted in the beacon frame including: timestamp (for synchronising purposes), beacon interval, capability information (e.g. requirement that all MMTs wishing to use AP must use a certain security protocol), SSID, supported data rates and parameter sets (e.g. the specific signalling methods such as frequency hopping spread spectrum, direct sequence spread spectrum, etc. that the AP uses).

Typically, when a MMT discovers one or more WLAN a message or other indication is provided to the user informing them of the availability of the WLAN. At this point the user has to manually select the WLAN to use it (often there are several available and the user must select the one that they are permitted to use), and if a secure WLAN, may have to go through various configuration steps (e.g. input of a pre-shared key) to obtain access to the WLAN. Even if the WLAN is fully open, the user must still respond to some invitation from the terminal. Users already receiving content (watching a multicast TV service) from one network (e.g. the broadcast network 12) when they come in range of a WLAN are not motivated to switch to the WLAN since this would result in an interruption of the service. The operation of the system is intended to overcome this difficulty (amongst others) so that the MMT can automatically switch to the correct WLAN when in range without having to ask the user.

After receiving the beacon frame if the MMT 14 wishes to use the AP provided by the WLAN router 24 it must firstly authenticate with the AP and then associate with it. Usually this process must be commenced by the user (e.g. by selecting the correct SSID and pressing a 'connect' button on the display). Details of the authentication and association procedure can be found in ANSI/IEEE Std 802.11, 1999 Edition, to which reference is specifically made in this respect.

Following this, the MMT 14 must be configured to operate at the network layer so that it may send and receive IP datagrams and thereby access content at remote network locations on the Internet for example. To that end the WLAN interface 51 can be assigned a particular IP address using DHCP for example.

In order for the WLAN interface 51 to be pre-configured, the user must set-up and register for the inter-working service as described below. The 'inter-working' service may be taken to mean the handover of a service from the broadcast network 12 to the WLAN 13 and *vice-versa,* although other inter-working services are possible as explained below. The user purchases or otherwise obtains an inter-working gateway (described above); during installation the inter-working gateway 28 initiates a registration procedure with the inter-working server 18. The user then registers one or more MMT to use the inter-working service on that WLAN. The inter-working server is then able to pre-configure the WLAN interfaces of the or each MMT so that when it first comes into range of the WLAN after initiation of the inter-working service, the MMT can connect to the WLAN automatically without involving the user.

### Registration

The inter-working gateway 28 may be added to an existing WLAN network or may be included as part of a new WLAN setup. As such the inter-working gateway 28 may be manufactured and sold as part of a WLAN router 24 or it may be manufactured and sold as a stand alone unit for direct or indirect connection to the WLAN router 24. Furthermore the UICC 38 may be sold as part of the inter-working gateway 28, or there may be a slot or other place in or on the gateway for the user to insert a UICC bought from a third party. In the latter case, the user would be required to follow the standard network-operator procedure in order to activate it.

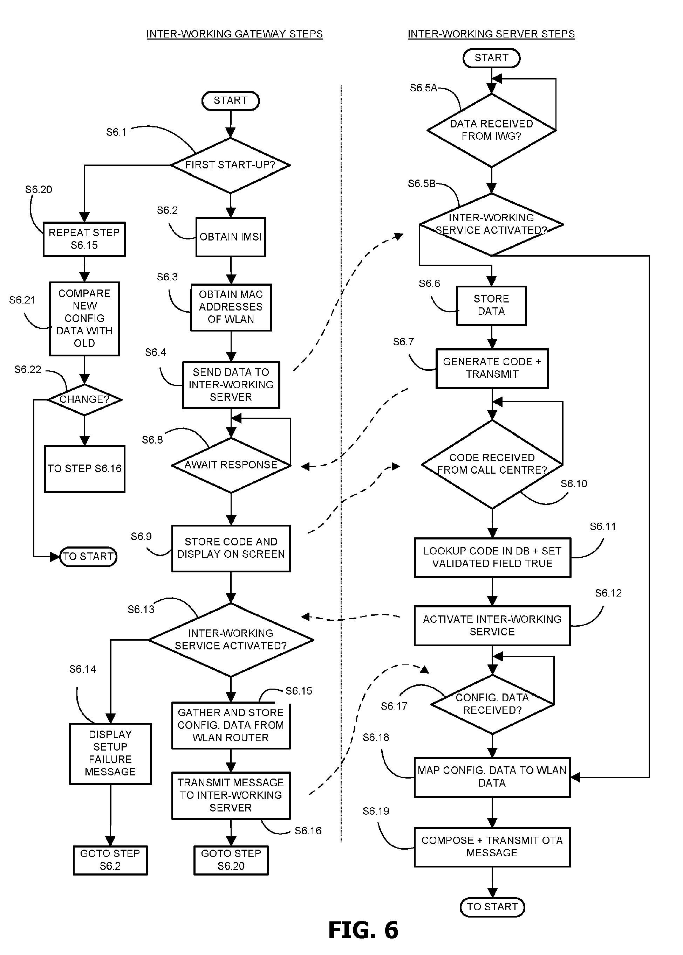

Assuming that the inter-working gateway 28 is a stand-alone unit and that the UICC 38 is supplied therewith (and has been activated by the user), the user simply connects the inter-working gateway 28 to the WLAN router 24 using an RJ45 cable for example. Referring to Fig. 6 on first start-up at steps S6.1 and S6.2 the wi-fi inter-working manager 36 obtains an authentication code in the form of an IMSI number from the UICC 38 and stores it in the memory 34. At step S6.3 the wi-fi inter-working manager 36 interrogates the WLAN router 24 to obtain the MAC addresses of all of its interfaces (i.e. both wired and wireless). The IMSI and MAC address are then sent in a message from the inter-working gateway 28 to the inter-working server 18 using the 3G transmission channel provided by the 3G interface 39 and antenna 39a at step S6.4.

The inter-working server 18 monitors for receipt of data from WLAN routers at step S6.5A. Upon receipt of data from the inter-working gateway 28, the inter-working server 18 firstly checks whether or not the inter-working service is activated for the gateway at step S6.5B. If so it proceeds straight to step S6.18, described in greater detail below. If not, at step S6.6 the inter-working server 18 stores the data in computer memory (e.g. magnetic storage, optical storage, etc.) in the form of a database of IMSI mapped to MAC addresses. At step S6.7 the inter-working server 18 generates a code (such as an alphanumeric string, although any code will suffice) that is then transmitted to the inter-working gateway 28, and inserted into the database against the IMSI and MAC entries. The purpose of the code is to enable the inter-working server 18 to perform an authorisation check i.e. that the user has access to the physical harware of the WLAN 13 and is therefore not a malicious user.

After sending the IMSI and MAC address(es) the wi-fi inter-working manager 36 awaits a response message from the inter-working server 18 at step S6.8. Once received the code is stored at step S6.9 in memory 34 for display on the LCD screen 35. The inter-working gateway 28 may also use the LCD screen 35 to display status information messages and registered telephone numbers for example.

As part of the instructions accompanying the inter-working gateway 28, the user is requested to note the code displayed on the LCD screen 35. For security purposes the user is then asked to supply the code to the inter-working server 18 via another channel; such channel may be via a Web portal on the network operator's website, by sending an SMS message containing the code to a particular telephone number associated with the inter-working server 18 or by a telephone call to a call-centre of the network operator for example; the SMS option is preferred since it is the not essential for the user to have access to any other computing equipment such as the PC 26. When sending the SMS the user is asked to supply the following data:
(1) the mobile telephone number(s) that will be associated with and have access to the media server 18 through the WLAN router 24; and
(2) the authentication code displayed on the LCD screen 35 of the WLAN router 24.

In this way the user does not have to find and supply any complicated technical data such as the IMSI and MAC addresses.

The inter-working server 18 awaits receipt of a code from its SMS interface at step S6.10. Once received, at step S6.11 the inter-working server 18 uses the authentication code to interrogate the database stored in memory and assuming a matching entry is found sets a validation field true to indicate that the authorisation check has been passed.

If at step S6.9 the inter-working gateway 28 does not have an LCD screen 35, the user may be instructed to supply to the inter-working server 18 the MAC addresses of the WLAN router 24 as the code, instead of one generated by the inter-working server 18 (the MAC addresses are often printed on the underside of the housing of WLAN routers). The inter-working server 18 may use one of the MAC addresses to lookup the associated entry in the database and set the validation field.

Once the authorisation check has been passed, the inter-working server 28 activates the inter-working service at step S6.12 i.e. activates the association in the database between the WLAN MAC addresses and the telephone number(s) that will have access to the WLAN. At this point the inter-working server 18 has a mapping between those MMTs (via telephone numbers) and the hardware of the WLAN router 24. Accordingly it is possible for network operators to discover the user(s) of the WLAN and its location, e.g. via address records associated with the telephone numbers.

Following storage and display of the authorisation code at step S6.9, the inter-working gateway 28 awaits at step S6.13 a message from the inter-working server 18 to indicate that the inter-working service has been activated. The inter-working gateway may wait for an unlimited time for this message or for a limited time e.g. 24 hours. If setup was unsuccessful the inter-working gateway 28 displays a corresponding message on the LCD screen 35 at step S6.14. After receiving the message indicating activation of the service, the wi-fi inter-working manager 37 communicates (e.g. using Telnet or SSH) with the firmware of the WLAN router 24 via the physical interface 36 to obtain its configuration data at step S6.15 and stores the data in memory 34. The configuration data comprises the following:
(1) a network identifier i.e. an SSID of the wireless network;
(2) IP configuration and settings (e.g. IP address(es), subnet mask, gateway IP address, DNS, etc.);
(3) Security data: any network security key (e.g. WEP, WPA, RADIUS, etc.)
(4) The encryption type of the network key (e.g. Open, pre-shared, PSK, AES);
(5) Firewall settings (e.g. blocked/allowed ports, blocked/allowed IP addresses, and any rules to allow/block certain packet traffic) ; and
(6) QoS and routing profiles (e.g. preferential treatment for VoIP traffic).

There are various methods of extracting the data from the firmware in the WLAN router 24 and the data is stored in a different way for each vendor, although a general way is in table form. In the example of Fig. 3A the applicant installed a different firmware on the Linksys router ('OPEN WRT' presently available at http://www.openwrt.org) enabling communication by Telnet. Using Linux commands and string searching the kind of security, MAC address and SSID can be discovered. In particular, the version of the OPEN WRT firmware known as the 'WhiteRussian Configuration' has been used on the WLAN router 24 (details of this configuration can presently be found at http://wiki.openwrt.org). The steps used in this implementation to obtain the desired data are as follows:
(a) open a socket at the WLAN router 24 using Telnet;
(b) to obtain the SSID send the following command to the WLAN router 24 from the M2M:
   nvram get w10_ssid
   and store the result in memory;
(c) to obtain the MAC address send:
   nvram get w10_hwaddr
   and store the result in memory;
(d) to obtain the security mode send:
   nvram get w10_wep
(e) then read returned text;
(f) if 'enabled' is returned then send
   nvram get w10_key
   and store the result in memory;
(g) if 'disabled' is returned at step (e), then determine if WPA encryption is used by sending:
   nvram get w10_akm
(h) then read returned text to determine if WPA is used (if so the returned value is 'psk' or 'psk2' for WPA with a pre-shared key); if 'open' is returned no WPA security is used;
(i) if WPA is used, send:
   nvram get w10_wpa_psk
   to obtain the key and store the key in memory;
(j) otherwise mark WLAN router as open (i.e. no security).

By using further similar commands it is possible to discover the remaining configuration data of interest from the WLAN router 24. It is to be borne in mind that in a commercial implementation the wi-fi inter-working manager 37 is likely to be embedded in the WLAN router 24. In that case the vendor of the router will use implementation-specific protocols and commands to extract the configuration data from the tables.

At step S6.16 the wi-fi inter-working manager 37 composes a message (e.g. an SMS message or a message in XML format) containing the configuration data and the authorisation code, and transmits it to the inter-working server 18 using the 3G connection provided by the UICC 34 and 3G interface provide by the WLAN router 24. Whilst the use of the 3G connection is not essential, it is advantageous insofar as the inter-working server 18 knows that data received over the 3G link is relatively secure.

On receipt of the message at step S6.17 the inter-working server 18 uses the code to lookup to look up correct entry in the database and the enters the configuration data at step S6.18 into the database so that it is mapped to the mobile telephone numbers associated with the WLAN. At step S6.19 the inter-working server composes a personalised Over The Air (OTA) settings message for each mobile phone number that is registered in the database. The OTA settings message also includes a user name and password to enable the user to access the media server 16.

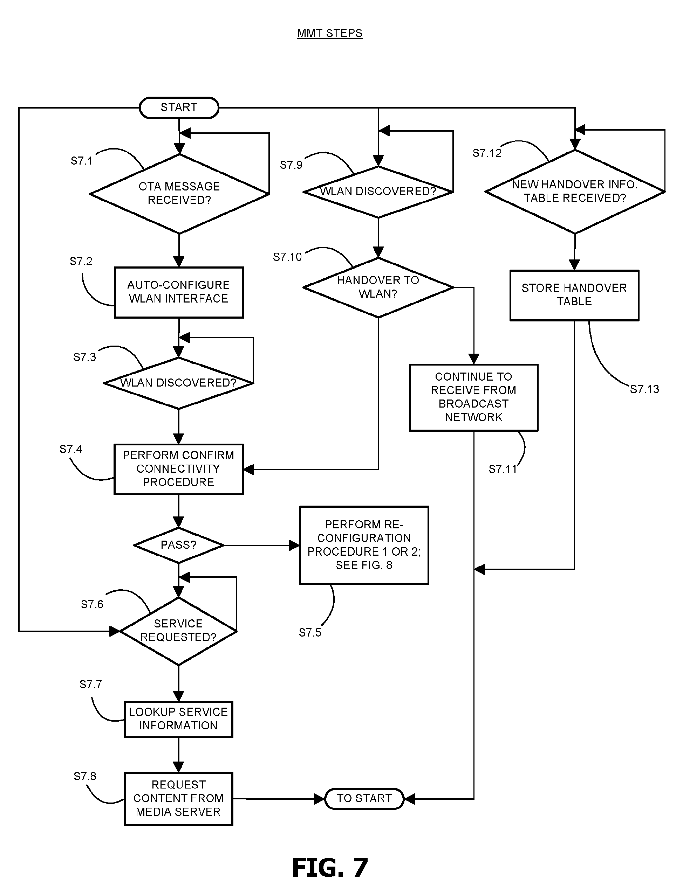

Referring to Fig. 7, the MMT 14 awaits receipt of an OTA message from the network. At this stage the MMT 14 is unaware of setup of the inter-working service; nevertheless the MMT 14 is OTA-enabled meaning that it can receive software updates and configuration data from the network operator (or indeed any third party that might be administering the inter-working service) over the air interface. Accordingly the MMT 14 is always ready to receive an OTA message. When the OTA message is received at step S7.1 from the inter-working server 18, the MMT 14 uses it to automatically configure the WLAN interface 51 at step S7.2 so that it can send and receive data via the WLAN router 24 when the MTT 14 is in the home environment. Alternatively the OTA message may be used to generate and store a profile for the particular WLAN that may by retrieved and used to correctly configure the WLAN interface when the WLAN 13 is detected. In this way the MMT 14 can be correctly configured for accessing the WLAN router 24 without the user having to configure the interface manually and/or choose which WLAN to connect to.

### WLAN Discovery

Following successful configuration of the WLAN interface 51, the MMT 14 awaits discovery of the home WLAN network at step S7.3. The MMT may discover the presence of the home WLAN using one or a combination of the following methods:
(a) Location Based Service (LBS) assisted;
(b) GPS assisted;
(c) WLAN assisted; or
(d) WLAN interface 51 always on.

Location discovery techniques are well-known. For example the location of the MMT 14 may be obtained from a GPS receiver built into the phone, or by using radiolocation and trilateration based on the signal-strength of the closest cell-phone towers.

Preferably, WLAN discovery (i.e. (a), (b) or (c)) only takes place when the user of the MMT 14 requests a particular service (e.g. to download/watch television) that will be delivered initially from the mobile network 11 or broadcast network 12. Once the location of the MMT 14 is obtained, it can be compared against the location of the home WLAN (which might be given by the GPS co-ordinates of address of the main user i.e. the person who registered the inter-working service - see step S6.12). There are numerous ways that WLAN discovery can proceed from this point. For example, if the MMT 14 is within a pre-determined range (e.g. 50m radius) of the home WLAN, the WLAN interface 51 may be switched on for the duration of the service. However, having the WLAN interface 51 switched on consumes a lot of power from the battery. Accordingly, if it is determined that the MMT 14 is within the same post-code or other geographically defined area as the home WLAN, then the WLAN interface 51 may be activated periodically for a limited number of times to try to detect the home WLAN. If the MMT 14 is a long way from the home WLAN (e.g. more than 25 miles) the WLAN interface 51 may not be activated at all. In the latter case, a location update may be scheduled to take place every half an hour for example, to determine whether or not the WLAN interface should be activated and a handover could take place. The frequency of such periodic location checks could be made inversely proportional to the distance that the MMT 14 is from the home WLAN.

Referring again to Fig. 7, the MMT 14 awaits discovery of the home WLAN. Once discovered, a confirm connectivity procedure is performed at step S7.4 to ascertain whether or not the MMT 14 can successfully connect to the home WLAN and receive the service. The confirm connectivity procedure is as follows:
(1) the MMT 14 attempts (maximum n times) to connect to the home WLAN; if the connection fails the MTT inter-working manager initiates a first re-configuration procedure (described subsequently) to re-configure the WLAN interface 51 (step S7.5);
(2) if the WLAN connection is established, the MMT inter-working manager attempts to establish a TCP connection with the media server 16 and/or inter-working server 18 through the ADSL connection 23; if this connection attempt fails the MMT inter-working manager initiates a second re-configuration procedure (described subsequently) to re-configure the service (step S7.5).

Following a successful outcome of the confirm connectivity procedure the MTT 14 is ready to receive data from the media server 16.

### Handover Information Table

In order for the MMT 14 to receive data from an IP-based network it needs to know where the content is located (i.e. an IP address and TCP/UDP port number of the media server providing the content, together with a file name(s) and location of the content on the media server). The Handover Information Table is intended to help the MMT 14 obtain this information either during handover from the broadcast network 12 to the home WLAN 13, as well as during delivery of content straight to the home WLAN 13 when a service is requested. In particular, the Handover Information Table maps program channel information to IP configuration data needed by the media server 16 to send the same program over an IP-based network to the MMT 14.

The Handover Information Table may be sent as part of the Program Association Table (PAT) in the MPEG-TS. For example as well as the mapping between Program and PID, the Program/PID may also be mapped to the IP configuration data to obtain the same program from the media server 16. Alternatively the IP configuration data could be contained in the Program Map Table (PMT) obtained by filtering the PID for the Program as indicated by the PAT. Also the table may be sent by using the private section format (see ISO 13818-1:2000 MPEG-2 systems specification).

At step S7.6 the MMT 14 awaits request of a service by the user. When requested, the MMT 14 looks up the IP configuration data in the most recent Handover Information Table that it has in memory. The service information can be placed in a content request message and sent to the inter-working server 18. The inter-working server 18 handles the request on behalf of the MMT 14 and forwards the request to the media server 16.

As mentioned above, it is possible that the MMT 14 may have tuned to a program broadcast by the broadcast network 12 whilst away from the home WLAN 13. Accordingly the MMT 14 may be scanning periodically at step S7.9 for reception of a signal from the home WLAN 13. When received, the MMT 14 determines at step S7.10 whether or not handover to the WLAN is advantageous (e.g. on the basis of relative signal strengths between the broadcast network 12 and WLAN 13, on the basis of a user preference or under control of the network operator, or use any of the handover decision methods described in WO2006/100438). If it is decided that handover is not advantageous, the MMT 14 continues to receive the data from the broadcast network at step S7.11.

If however, it is determined that a handover to the WLAN 13 would be advantageous, the MMT 13 proceeds to step S7.4 to perform the confirm connectivity procedure and subsequent steps described above. When the MMT 14 reaches step S7.7 it uses the PID(s) of the program to which it is currently tuned to look up the corresponding IP address and port number data of the media server 16 in the latest Handover Information Table. The MMT 14 uses this information to initiate delivery of content from the media server 16 over via the WLAN 13. When data starts to arrive at the MMT 14 on the WLAN interface 51 from the media server 16, the MMT 14 stops filtering packets from the MPEG-TS received on the broadcast interface 52. This helps to provide a seamless handover from the user's perspective.

The Handover Information Table may be received by the MMT 14 in any one or any combination of the following ways:
(a) from the broadcast network 12 in the Program Specific Information (PSI) metadata and Service Information (SI) tables that are periodically broadcast as part of the MPEG-TS;
(b) from the mobile network 11; and/or
(c) from the WLAN 13 either through the ADSL line 23 or the 3G connection provided in the inter-working gateway 28, and then forwarded to the MTT 14.

Accordingly the MMT 14 listens continuously for new Handover Information Tables at step S7.12; if received, the new version is stored in memory at step S7.13 for use at step S7.7 to look-up service information regarding how the content can be obtained over an IP network.

### Content Delivery

There are two scenarios to consider:
(1) the user is in the coverage area of the WLAN router 24 when requesting content; and
(2) the user is viewing contend when he/she enters the coverage area of the WLAN router 24

In case (1) the MMT 14 reads service information stored in the memory 34 and requests the content using the connection to the media server 16 provided by the home WLAN. In case (2) the MMT 14 will connect to the home WLAN using the Handover Information Table (described below). In either case the MMT 14 will need to use the password and user name sent in the OTA settings message in order to access the media server 16.

### Re-configuration procedure

If the WLAN interface 51 fails to connect to the WLAN 30 at step (1) of the confirm connectivity test above (step S7.4, Fig. 7), a first re-configuration procedure is initiated. In that case the MMT 14 uses its 3G transceiver 50 to send a message (e.g. an SMS message) via the mobile network 11 to the inter-working server 18 at step S7.2. At step S8.3 the inter-working server 18 awaits receipt of a message indicating that a confirm connectivity test failed. Upon receipt of such a message, the inter-working server 18 identifies at step S8.4 which part of the confirm connectivity test failed: if step (1), it searches the database for the MAC address(es) and SSID of the WLAN router 24 at step S8.5. The database may be searched using the mobile telephone number of the MMT 14 that was received in the SMS message for example. On retrieving the configuration data the inter-working server 18 attempts to re-configure the WLAN interface of the MMT 14 by transmitting another OTA message containing the configuration data at step S8.6.

The MMT 14 awaits an OTA message at step S8.7. When received, the configuration data is used to re-configure the WLAN interface 51 at step S8.8 and the confirm connectivity test is repeated at step S8.9. The MMT 14 and/or inter-working server may be configured to count the number of re-configuration attempts and may abort the handover process after a certain number of unsuccessful attempts (e.g. three).

If MMT 14 has successfully connected to the WLAN 13 but the TCP connection test fails at step (2) of the confirm connectivity test, the MMT 14 uses its WLAN interface 51, and thereby the IP backbone 15, to inform the inter-working server 18. At step S8.4 the inter-working server 18 determines that step 2 failed since it has received one or more IP packet comprising a message (e.g. the IMSI of the MMT 14 or its telephone number). In that case the second re-configuration procedure is initiated and at step S8.10 the inter-working server instructs re-delivery of the most up-to-date Handover Information Table using any of the interfaces available to the MMT 14, e.g. DVB-H, 3G or WLAN. Upon receipt of a new Handover Information Table, the MMT 14 re-attempts step (2) of the confirm connectivity test using the IP address and port number from this most recent table. Again, the MMT 14 and/or inter-working server may be configured to count the number of re-configuration attempts and may abort the handover process after a certain number of unsuccessful attempts (e.g. three).

In the event that the user re-configures the WLAN router 24 in some way (e.g. changes SSID or network key), the inter-working gateway 28 is able to inform the inter-working server 18 of the changes. Referring again to Fig. 6, if at step S6.1 the inter-working gateway 28 determines that it is not the first start-up, at step S6.20 it goes to step S6.15 and interrogates the WLAN router 24 to obtain the latest configuration data. At step S6.21 and S6.22 the inter-working gateway 28 compares the latest configuration data with the previous configuration stored in memory. If any of the data has changed, then at step S6.23 the process of transmitting a message to the inter-working server 18 is repeated. Upon receipt of the data, the inter-working server 18 determines that the inter-working service is already in operation for that gateway. Accordingly it proceeds straight to step S6.18 in which the new configuration data is entered in the database. Following that, one or more OTA message is composed with the new data and transmitted to the or each MTT listed in the database entry of the inter-working gateway 28. In this way, each MTT is updated automatically with the new configuration settings for the WLAN 13.

### Other Applications

The invention is not limited to the main embodiment described above. Other applications include, but are not limited to:

### WLAN Re-configuration

Using either the 3G communication channel or a communication channel over the IP backbone 15, it is possible for the mobile network 11 to remotely re-configure the WLAN settings of the WLAN router 24. For example it may transmit an OTA Settings message over the 3G communication channel. Upon receipt the inter-working gateway 28 may use data in the message to change any of the WLAN settings (e.g. SSID, channel number, etc.) of the WLAN router 24. Alternatively, the database stored by the inter-working server 18 comprises the public IP address and port number of the WLAN router 24. Accordingly it is possible for the inter-working server 18 to send a message over the IP backbone 15 to the public IP address to re-configure the WLAN router 24. Following re-configuration by either method, the inter-working server 18 may send an OTA Settings message to each MMT 14 associated with WLAN to provide the new configuration settings.

The remote re-configuration possibility is extremely useful for network operators, enabling some degree of control over the configuration settings and security of WLANs of their customers. Furthermore, businesses (e.g. cafes, restaurants, bookshops, airports, marinas, hotels, etc.) that operate one or more WLAN may configure and administer some or all of the WLANs from a central location. This is a considerably advantage as many businesses have premises distributed over very wide geographical areas.

### Emergency Services

Using the above remote re-configuration option, it is envisaged that the emergency services could automatically re-configure one or more WLAN in a certain geographical area (e.g. part of a town or city) during an emergency or other appropriate circumstances so that only MMTs of the emergency services and or other certain people or organisations can access the WLAN(s). As such the inter-working server 18 may store an 'emergency' database that is generally the same as the database above, but which comprises an extra mapping of certain entries in the database to the telephone numbers of personnel of the emergency services; there may also be a particular SSID that is to be assigned to each WLAN during an emergency. This extra part of the database may be configured manually by the operator of the inter-working server 18 in conjunction with the emergency services for example. During an emergency the emergency database may be utilised to re-configure certain of the WLAN routers (as identified in the emergency database) so that only emergency service personnel may access them e.g. to make VoIP calls. It may also be used to re-configure MTTs of personnel to automatically connect to such WLANs when discovered during the emergency situation.

### Away from Home WLAN

Although the main embodiment above has been described in relation to a WLAN in a user's home, the invention has wider application. In particular, the invention may be applied in any WLAN away from the user's home and even for those users that do not have a WLAN at home. For this service, the user registers using a web interface at an online portal provided by the service operator. The user supplies the following data amongst other things:
(1) MMT phone number (an SMS message exchange might take place for authentication purposes);
(2) IMSI from UICC (optional);
(3) Username; and
(4) Password.

The MMT of the user is then updated with the application software for the service (e.g. with an OTA Settings message, or the user downloading from the Internet). The user installs the software on the MMT and configures it with the username and password.

During use, the application software for the service performs the following steps. When the MMT is on, the application software scans for all WLANs that it can detect in its present location. On detecting each WLAN the application stores the SSID and associated MAC address. After a given period (e.g. 5-30s) the application enters all detected WLANs into one or more message and sends to the inter-working server 18 over a 3G connection, either using SMS or GPRS for example. Upon receipt of the message the inter-working server 18 uses the phone number in the SMS message to authenticate the user, and then cross-checks each SSID/MAC pair that is has received with those in its database for security purposes (i.e. to check that the SSID has not been faked by a malicious user for example). In reply the inter-working server 18 sends the MMT the list of WLANs in order of preference, although it is to be noted that this step is not essential. Following that, the inter-working server 18 sends the MMT one or more OTA Settings message to configure the MMT for each WLAN detected.

Once configured the MMT connects to one of the WLANs without requiring any additional configuration steps from the user. If more than one WLAN is discovered the MMT may use the priority list provided by the inter-working server 18 to connect to the best WLAN (alternatively the MMT may decide on the basis of signal strength or may simply connect at random). When the MMT comes within range of one of the pre-configured WLANs again, it automatically connects without having to contact the inter-working server 18. Since users often move through and visit similar locations in their daily lives, the MMT can be considered to undergo a learning phase in which it becomes pre-configured with the settings of those WLANs that it detects regularly.

In order to populate the database with SSID/MAC pairs, the inter-working server 18 may rely on the method described in the main embodiment i.e. a registration procedure taking place when the WLAN is setup or when the inter-working service is first enabled at the WLAN router concerned. Alternatively the database may be populated manually by the inter-working service operator.

This 'Away from Home WLAN' embodiment enables the inter-working service to be provided to users whilst away from a home WLAN. Of course both services may be provided in conjunction i.e. the user may obtain the inter-working service whilst at home and whilst away from home.

The embodiment has the particular advantage that the mobile network operators may hand over load from the mobile or broadcast networks to WLANs when the user is within range of any appropriate WLAN.

It is expected that embodiments of the present invention will help to reduce the density and cost of installing broadcast network (e.g. DVB-H) infra-structure. In particular, it is expected that fewer broadcast transmitters will be needed since users will be able to handover to a WLAN or similar network when the broadcast network signal falls below a pre-determined threshold for example. Therefore coverage in small areas (e.g. 10-50m) of poor signal quality could be provided by WLAN routers thereby mitigating the need to install much more expensive and complex DVB transmitters.

The inter-working gateway 28 may be manufactured as part of the WLAN router 24 and/or ADSL modem 22, or as a separate stand-alone component connectable to a WLAN router. The inter-working gateway 28 enables the mobile network operator 11 to extend the Authentication, Authorisation and Accounting (AAA) facilities provided by standard UICCs into the WLAN domain.

One particular advantage of the invention is that the user of the MTT 14 does not need to have a PC or other computer attached to the WLAN 13 in order to set-up and maintain an inter-working service account with their network provider. All of the inter-working service can be set-up and maintained without the need for another computer. Furthermore the user does not need any specialist technical knowledge to set-up the service. All of the configuration steps are transparent to the user.

The principles of the invention are not limited to accessing content from a remote media server. Other examples where the invention may find use include, but are not limited to, Voice over IP (VoIP), e-mail services and Web browsing.

The computer executable instructions of the MMT might be placed on the MMT 14 at point of manufacture; alternatively, they may be provided in the form of an upgrade from the Home Network.

Although the embodiments of the invention described with reference to the drawings comprises computer apparatus and methods performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the methods according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal that may be conveyed via electrical or optical cable or by radio or other means.

When the program is embodied in a signal that may be conveyed directly by a cable or other device or means, the carrier may be constituted by such cable or other device or means. Alternatively, the carrier may be an integrated circuit in which the program is embedded, the integrated circuit being adapted for performing, or for use in the performance of, the relevant methods.

## Claims

1. In a heterogeneous network environment comprising a plurality of first wireless networks and a second wireless network, said plurality of first wireless network utilising a first wireless communication protocol and said second wireless network utilising a second wireless communication protocol different to said first, a method of gathering data from said plurality of first wireless networks, which method comprises the steps of:
(a) electronically extracting a network identifier from at least one of said first wireless networks;
(b) transmitting said network identifier to a remote server; and
(c) said remote server compiling a database of network identifiers received from said plurality of first wireless networks, storing of said database facilitating inter-working between one or more of said plurality of first wireless networks and said second wireless network.

2. A method according to claim 1, further comprising the step of using a different wireless communication protocol to authenticate said at least one first wireless network with said remote server before step (b), said authentication step comprising the steps of obtaining at least one MAC address from a device that operates said at least one first wireless network, and transmitting said at least one MAC address to said remote server using said different wireless communication protocol.

3. A method according to claim 2, wherein said at least one first wireless network comprises a device providing an access point to said first wireless network, which device comprises a first interface using said first wireless communication protocol and a second interface using said different wireless communication protocol, the method further comprising the steps of obtaining an authentication code from said second interface, which authentication code is useable to authenticate said at least one first wireless network with said remote server.

4. A method according to any preceding claim, wherein said network identifier is extracted from said at least one first wireless network as part of a set of configuration data, which configuration data facilitates connection of multi-mode terminals to said at least one first wireless network, and wherein said configuration data is stored by said remote server in said database.

5. A method according to any preceding claim, wherein there is one or more multi-mode terminal having one or more interface for accessing wireless networks in said heterogeneous network environment, the method further comprising the steps of:
(i) said multi-mode terminal detecting one or more of said plurality of first wireless networks and storing the network identifier broadcast by each;
(ii) transmitting to said remote server a list comprising the or each network identifier;
(iii) said remote server receiving said list and using the or each network identifier to search said database for entries corresponding thereto; and
(iv) said remote server instructing configuration of said multi-mode terminal and/or storage of a configuration profile for at least one of said one or more first wireless network using configuration settings extracted from said database.

6. A method according to any preceding claim, further comprising the steps of said remote server sending said network identifier to a multi-mode terminal that has an interface, receipt of said network identifier enabling said multi-mode terminal to configure said interface for receiving data from said first wireless network such that said multi-mode terminal is connectable to said first wireless network upon detection thereof.

7. A method according to any preceding claim, further comprising the step of transmitting a Handover Information Table to be received by multi-mode terminals, which Handover Information Table comprises data facilitating request by a multi-mode terminal of a service from a network node residing in a remote IP-based network, which service is to be delivered via said at least one of said first wireless networks.

8. A method according to claim 7, wherein said Handover Information Table is transmitted by said second wireless network and/or a broadcast network to which said multi-mode terminal has access.

9. A network node comprising a memory storing computer executable instructions for performing and/or instructing the remote server steps of any of claims 1 to 8.

10. An apparatus for use with a wireless network, which apparatus is configured, in use, to access a router in said wireless network and to: (i) extract from said router a network identifier assigned to said network, (ii) transmit said network identifier to a remote server.

11. An apparatus as claimed in claim 10, wherein a network location of said remote server is stored in a memory of said apparatus, whereby said network identifier may be sent to said network location.

12. An apparatus as claimed in claim 10 or 11, further comprising a wireless interface for transceiving data via a wireless communication protocol different to the wireless communication protocol used by said wireless network.

13. An apparatus as claimed in claim 12, wherein said wireless interface comprises a mobile telecommunications modem and a Universal Integrated Circuit Card (UICC) or a slot therefor, whereby in use, said apparatus may be authenticated by a remote mobile telecommunications network.

14. A multi-mode terminal comprising a memory storing computer executable instructions for performing the multi-mode terminal steps of any of claims 1 to 6.

15. A data communication network adapted to perform the network method steps of any of claims 1 to 8.

16. A method of receiving content at a multi-mode terminal in a heterogeneous network environment which method comprises:
(a) receiving content at said multi-mode terminal from a broadcast or mobile type network;
(b) monitoring for the presence of a WLAN type network; and
(c) upon detection of said WLAN type network, using a configuration profile stored in memory to automatically connect to said WLAN type network, which configuration profile has been generated by a method according to any of claims 1 to 8; and
(d) requesting said content to be delivered from a remote media server over said WLAN type network.

17. A multi-mode terminal comprising a memory storing computer-executable instructions for performing the steps of claim 16.
